# EUROPÄISCHE PATENTSCHRIFT

(11) **EP 1 234 728 B1**
(45) Veröffentlichungstag und Bekanntmachung des Hinweises auf die Patenterteilung: **02.01.2004**
(21) Anmeldenummer: 02002318.0
(22) Anmeldetag: 31.01.2002
(51) Int. Cl.: B60R 19/18, B60R 19/44

(54) **Stossfängersystem für ein Fahrzeug**
Bumper system for a motor vehicle
Système de pare-chocs pour véhicule automobile

(30) Priorität: 16.02.2001 DE 10107287
(43) Veröffentlichungstag der Anmeldung: 28.08.2002
(73) Patentinhaber: Dr.Ing. h.c.F. Porsche Aktiengesellschaft, 70435 Stuttgart (DE)
(72) Erfinder: Rinklin, Gerhard, 75233 Tiefenbronn (DE)

(56) Entgegenhaltungen:
- EP-A- 0 050 205
- DE-A- 3 622 483
- US-A- 3 926 463

## Beschreibung

Die Erfindung bezieht sich auf ein Stoßfängersystem für ein Fahrzeug, gemäß Oberbegriff des Anspruchs 1.

Ein gattungsgemäßes Stoßfängersystem für ein Fahrzeug ist aus der DE 28 38 572 A1 bekannt. Es weist einen Stoßfängerträger auf, an dem Prallhörner, insbesondere durch Verschraubung, befestigt werden. Der Stoßfängerträger, der aus einem hochfesten und verformungssteifen Material besteht, wird von einem Verkleidungsteil abgedeckt, welches Bestandteil der Karosserieaußenhaut ist. Dieses Verkleidungsteil besitzt zwei mit Abstand zueinander liegende Durchbrüche, durch die die Prallhörner hindurchtreten und somit über die Karosserieaußenhaut hervorstehen.

Die DE 42 01 839 C2 beschreibt ein Stoßfängersystem mit einem Stoßfängerträger, bei dem die Prallhörner an dem Stoßfängerträger durch Materialumformung herausgeformt und somit einstückig mit diesem hergestellt sind. Dieses Stoßfängersystem umfasst ferner ein Verkleidungsteil, welches den Stoßfänger und die Prallhörner abdeckt.

Aufgabe der Erfindung ist es, ein Stoßfängersystem der eingangs genannten Art zu schaffen, bei dem für unterschiedliche Ausführungsvarianten dennoch die Lagerhaltungsund Herstellungskosten reduziert werden können.

Gelöst wird diese Aufgabe mit einem Stoßfängersystem, das die in Anspruch 1 genannten Merkmale zeigt. Weitere, die Erfindung ausgestaltenden Merkmale sind in den Unteransprüchen angegeben.

Die mit der Erfindung hauptsächlich erzielten Vorteile sind darin zu sehen, dass für Fahrzeuge, die mit oder ohne Prallhörner ausgestattet werden sollen, lediglich ein Verkleidungsteil nach einer Ausführungsvariante bereitgestellt werden muss. Wird ein Fahrzeug mit Prallhörnern ausgestattet, so wird - in einer Weiterbildung der Erfindung - in den Durchbruch ein Abdeckteil eingesetzt, das eine an das Prallhorn angepaßte Prallhornverkleidungskontur aufweist. Falls ein Fahrzeug ohne Prallhörner hergestellt wird, kann in das Verkleidungsteil ein Abdeckteil eingesetzt werden, das etwa flächenbündig mit dem Formverlauf der Außenfläche des Verkleidungsteils ausgebildet ist. Somit ergibt sich im Bereich des Verkleidungsteils eine geschlossene Karosserieaußenhaut, die ein einheitliches Erscheinungsbild aufweist. In das Verkleidungsteil, das vorzugsweise aus Kunststoff hergestellt ist, kann der zumindest eine Durchbruch bereits bei dessen Fertigung im Kunststoff-Spritzgießprozess ausgespart werden. Er kann jedoch auch nachträglich durch an sich bekannte Stanz-, Fräs- oder Schneideverfahren in das Verkleidungsteil eingebracht werden. So können je nach benötigter Anzahl der unterschiedlichen Stoßfängervarianten Verkleidungsteile mit oder ohne Durchbruch bereit gehalten werden. Damit ist es möglich, für unterschiedlichste Anforderungen, sei es zwecks Erfüllung länderspezifischer Gesetze oder aus logistischen, funktionalen und/oder optischen Ansprüchen, aus den bereit gestellten Komponenten Verkleidungsteil und Abdeckteil mit oder ohne Prallhornverkleidungskontur das passende Stoßfängersystem bereit zu halten.

Die Erfindung wird nachfolgend anhand von Ausführungsbeispielen mit Bezug auf die Zeichnung näher erläutert.

Es zeigen
- Fig. 1: in einer Teilinnenansicht ein erstes Ausführungsbeispiel eines Stoßfängersystems in Explosionsdarstellung,
- Fig. 2: in Außenansicht ein zweites Ausführungsbeispiel eines Stoßfängersystems in Explosionsdarstellung,
- Fig. 3: das Stoßfängersystem in einem Schnitt entlang der Linie III - III in Fig. 1,
- Fig. 4+5: jeweils ein weiteres Ausführungsbeispiel eines Stoßfängersystems und
- Fig. 6: eine Befestigungsvariante eines Abdeckteils an einem Verkleidungsteil eines Stoßfängersystems.

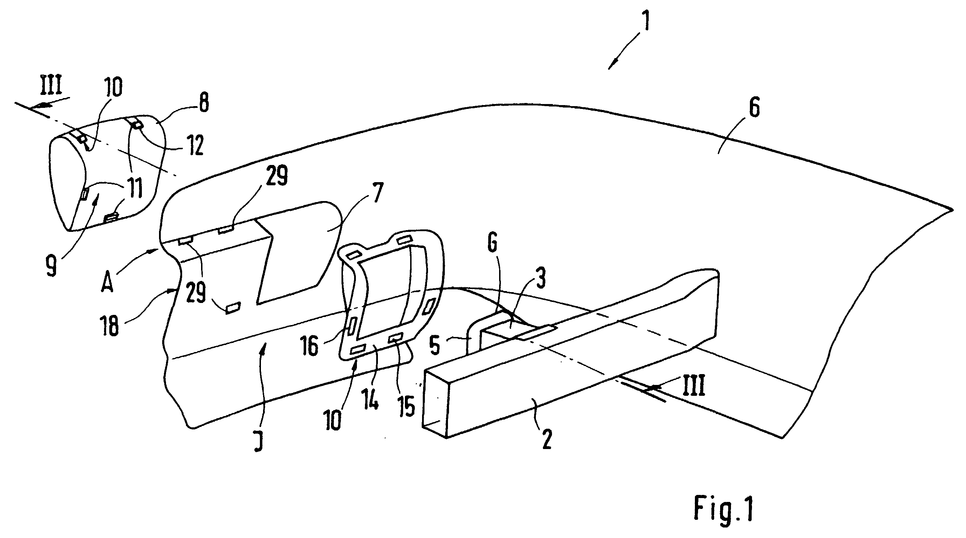

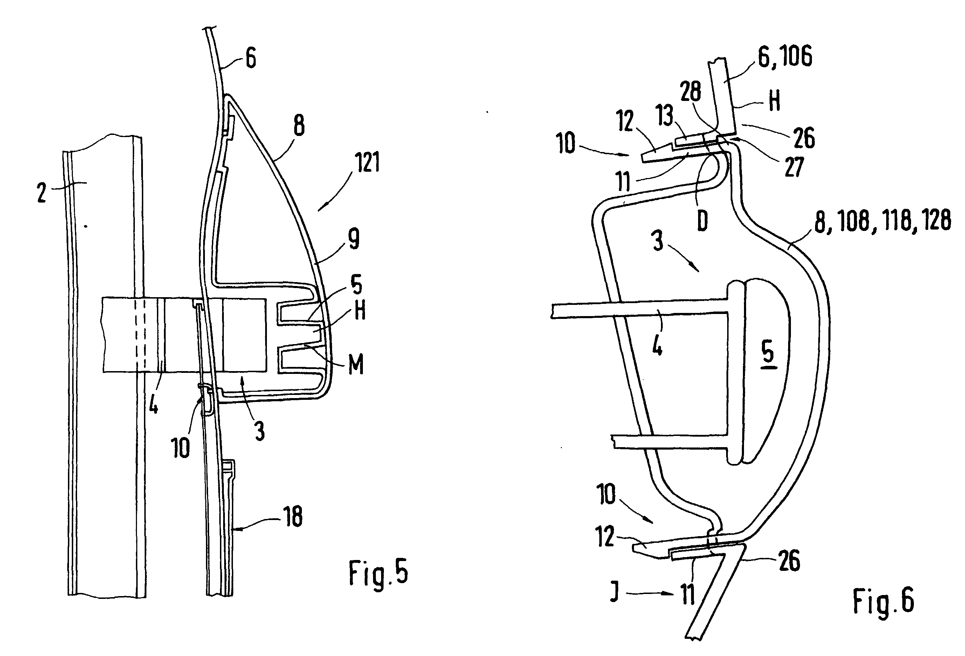

Das in Fig. 1 dagestellte Stoßfängersystem 1 umfasst einen Stoßfängerträger 2, der aus einem formsteifen Material hergestellt ist. Der Stoßfängerträger 2 ist an hier nicht dargestellten Längsträgern einer Rahmenstruktur bzw. einer Bodengruppe eines Kraftfahrzeugs, insbesondere Personenkraftwagen, befestigbar. An dem Stoßfängerträger können Prallhörner 3 angebracht werden, wobei hierfür vorzugsweise lösbare Befestigungen, wie Schraubverbindungen, Nietverbindungen (Fig. 4) oder dgl. verwendet werden. Denkbar wären allerdings auch unlösbare Verbindungen, wie z. B. eine Schweißverbindung oder eine durch Materialumformung realisierte Formschlussverbindung.

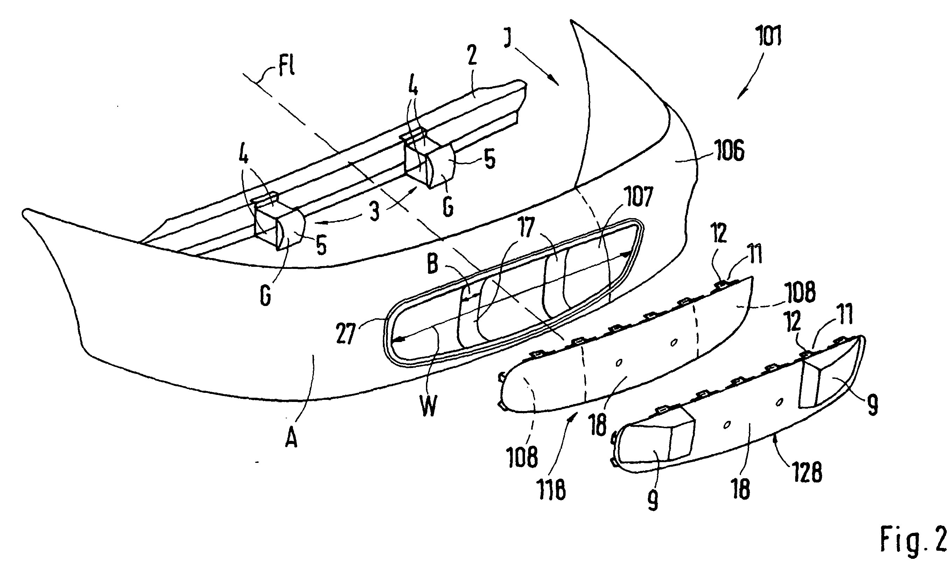

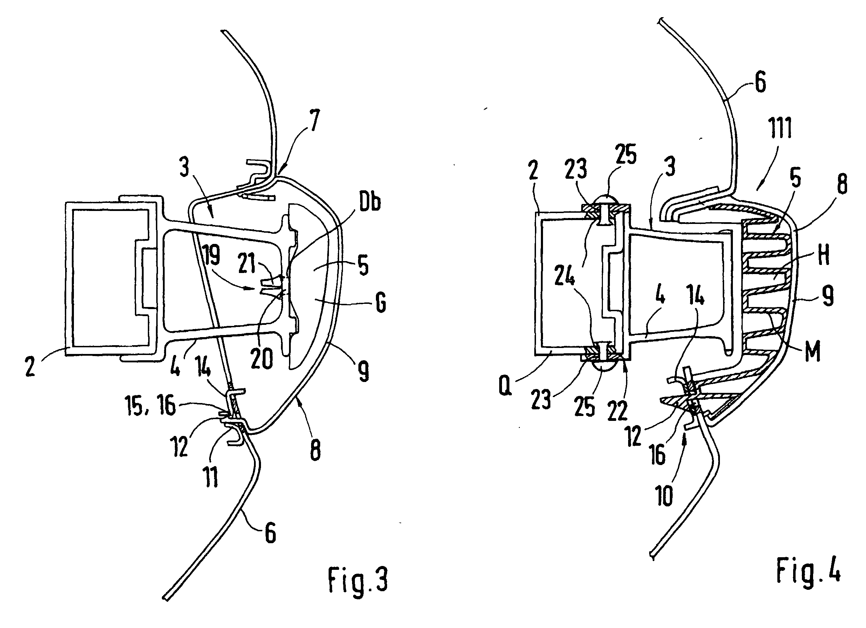

Die Prallhörner 3 sind - quer zur Fahrzeuglängsachse FI gesehen - mit Abstand zueinander am Stoßfängerträger 2 angeordnet, wie dies insbesondere in Fig. 2 wiedergegeben ist. Die Prallhörner 3 weisen gemäß Fig. 3 ein Tragelement 4 auf, welches mit dem Stoßfängerträger 2 verbunden werden kann. An seinem dem Stoßfängerträger abgewandten Ende weist das Tragelement ein Prallelement 5 auf, welches aus einem elastisch und/oder plastisch verformbarem Material hergestellt sein kann. Hierfür könnte beispielsweise ein Gummipuffer G oder dgl. vorgesehen sein. Es ist jedoch auch möglich, als Prallelement 5 eine Hohlstruktur H (Fig. 4 und 5) zu verwenden, die an dem Tragelement 4 angeordnet sein kann. Die Hohlstruktur H kann elastisch und/oder plastisch verformbar sein. Nach einer alternativen Ausführungsform kann allerdings auch eine plastisch und/oder elastisch verformbare Wabenstruktur für das Prallelement vorgesehen sein.

Das Stoßfängersystem 1 besitzt neben dem Stoßfängerträger 2 noch ein Verkleidungsteil 6, das Bestandteil einer nicht näher dargestellten Karosserieaußenhaut des Kraftfahrzeugs sein kann. Das Verkleidungsteil 6 kann ein Heck- oder Frontverkleidungsteil des Kraftfahrzeugs sein. Das Verkleidungsteil 6 und der Stoßfängerträger 2 sind vorzugsweise bezüglich der Fahrzeuglängsachse FI symmetrisch ausgebildet.

In Fig. 1 ist lediglich eine Hälfte des Stoßfängersystems wiedergegeben. Die hier nicht sichtbare Hälfte ist jedoch in der Regel symmetrisch zu der dargestellten ausgebildet. Das Verkleidungsteil 6 besitzt zwei beabstandet zueinander liegende Durchbrüche, von denen lediglich ein Durchbruch 7 zu sehen ist. Bei an dem Fahrzeug montierten Stoßfängersystem 1 durchgreift das Prallhorn 3 den Durchbruch 7 und ragt somit über die Karosserieaußenhaut, also über die Außenfläche A des Verkleidungsteils 6 hervor. Für das Verkleiden zumindest des Prallelements 5 ist in den Durchbruch 7 ein Abdeckteil 8 einsetzbar, welches eine an das Prallhorn 3 bzw. an das Prallelement 5 angepasste Prallhornverkleidungskontur 9 besitzt, die durch eine nach außen, also über die Fahrzeugaußenhaut überstehende auch als Ausdrückung bezeichnete Wölbung gebildet ist.

Für die Befestigung des Abdeckteils 8 an dem Verkleidungsteil 6 ist eine Rast- oder Clipsverbindung 10 vorgesehen. Das Abdeckteil 8 ist mithin lösbar mit dem Verkleidungsteil 6 verbunden. Die Rast- oder Clipsverbindung 10 umfasst zumindest einen von dem Abdeckteil 8 entspringenden Lappen 11 mit einer Rastnase 12, die das Verkleidungsteil 6, insbesondere einen daran ausgebildeten Vorsprung 13 (Fig. 6) oder Stufenabsatz, hintergreifen kann. Wie Fig. 1 erkennen läßt, kann jedoch auch ein den Durchbruch 7 umrandender, innenseitig am Verkleidungsteil 6 anliegender Aufnahmerahmen 14 vorgesehen sein, der eine Art Klemmbefestigung das Abdeckteils 8 am Verkleidungsteil 6 ermöglicht. Der Aufnahmerahmen 14 besitzt ein Aufnahmeelement 15 für den Lappen 11. Das Aufnahmeelement 15 ist insbesondere als Aufnahmedurchbruch 16 realisiert, durch den der Lappen 11 hindurchgreift, wodurch die Rastnase 12 hinter das Aufnahmeelement 15 des Aufnahmerahmens 14 greift, wodurch ein optimaler und fester Sitz sowie eine verbesserte, ggf. auch mehrmalige, Montage bzw. Demontage des Abdeckteils 8 erzielbar ist.

Wird beim Stoßfängersystem 1 gemäß Fig. 1 kein Prallhorn verwendet, kann vorzugsweise anstelle des Abdeckteils 8 mit Prallhornverkleidungskontur 9 ein Abdeckteil Verwendung finden, welches eine Außenkontur besitzt, die flächenbündig mit der Außenfläche A des Verkleidungsteils 6 ausgebildet, also an den Formverlauf der Außenfläche A angepaßt ist, so dass im Wesentlichen kein Übergang zwischen dem Verkleidungsteil 6 und dem Abdeckteil zu sehen ist. Ein derart im Wesentlichen ebenflächiges Abdeckteil 108 ist in Fig. 2 gestrichelt an einem Abdeckteil 118 eingezeichnet, wobei dieses Abdeckteil 118 für einen Durchbruch 107 in einem Verkleidungsteil 106 vorgesehen ist, welcher eine Öffnungsweite W derart besitzt, dass beide Prallhörner 3 durch diesen Durchbruch 107 hindurch treten.

Dieses Verkleidungsteil 106 weist - wie erwähnt - lediglich einen, vorzugsweise etwa ovalen, Durchbruch 107 mit einer Öffnungsweite W auf, der - um die Stabilität des Verkleidungsteils 106 zu erhöhen - jedoch vorzugsweise von einem quer zur Öffnungsweite W an der Innenseite I des Verkleidungsteils 106 verlaufenden Verstärkungssteg 17 überbrückt werden kann, dessen Breite B wesentlich geringer ausfällt als die Öffnungsweise W des Durchbruchs 107.

Sind für ein Stoßfängersystem 101 (Fig. 2) Prallhörner 3 vorgesehen, wird ein Abdeckteil 128 verwendet, das in den Durchbruch 107 einsetzbar ist. Dieses Abdeckteil 128 besitzt wie das Abdeckteil 108 bzw. 118 zumindest einen Lappen 11 mit einer Rastnase 12, die das Verkleidungsteil 106 hintergreift, um das Abdeckteil 128 in dem Durchbruch 107 zu halten. Das Abdeckteil 128 besitzt zwei Prallhornverkleidungskonturen 9, die als nach außen gerichtete Wölbung ausgebildet sind und die Prallelemente 5 abdecken. Sind keine Prallhörner 3 vorgesehen, wird das in Fig. 2 sichtbare Abdeckteil 118 in den Durchbruch 107 eingesetzt, das eine Außenkontur besitzt, die etwa flächenbündig dem Formverlauf der Außenfläche A des Verkleidungsteils 106 folgt. Sowohl an den Abdeckteilen 118 und 128 als auch an dem Verkleidungsteil 6 kann ein Kennzeichenfeld 18 vorgesehen sein, welches insbesondere zwischen den Prallhörnern 5 angeordnet ist.

In Fig. 3 ist noch ersichtlich, dass das Prallelement 5 mit einem Befestigungsclip 19 am Tragelement 4 anbringbar ist. Dieser einen Schaft 20 und endseitig eine geschlitzte Verdickung 21 aufweisende Befestigungsclip 19 wird durch eine Durchbrechung Db im Tragelement 4 gesteckt. Die Verdickung 21 weist in ihrem geschlitzten Bereich einen Außendurchmesser auf, der größer als der Innendurchmesser der Durchbrechung ist. Die Befestigung bzw. Verclipsung des Prallelements 5 kann auch anderweitig erfolgen.

Die in den Fig. 4 und 5 wiedergegebenen Ausführungsbeispiele eines Stoßfängersystems 111 bzw. 121 besitzen ein Prallelement 5, welches durch die Hohlstruktur H gebildet ist, die als mäanderförmige Struktur M realisiert sein kann. Die Schnittebene in Fig. 4 liegt parallel zur Vertikalen. Die mäanderförmige Struktur M kann sich jedoch auch parallel zu einer Horizontalen erstrecken, wie dies in Fig. 5 wiedergegeben ist, in der die Schnittebene parallel zu dieser Horizontalen verläuft. An der Hohlstruktur H, die hinter dem Abdeckteil 8, 108, 118 oder 128 liegt, kann das Abdeckteil befestigt sein. Die Hohlstruktur H und das Abdeckteil können dann mittels der Clipsverbindung 10 am Verkleidungsteil 6 oder 106 gehalten werden. Die Hohlstruktur H kann an dem Tragelement 4 befestigt und/oder als Einlege- und Befestigungsteil unter dem Abdeckteil 8 angeordnet sein.

Fig. 6 gibt noch eine Befestigungsvariante für das Abdeckteil 8, 108 118 oder 128 wieder, bei der der Aufnahmerahmen 14 entfallen kann. Das Abdeckteil weist, vorzugsweise mehrere, Lappen 11 mit Rastnasen 12 auf. Für die Clipsverbindung 10 sind an der Innenseite I des Verkleidungsteils 6, 106 die Rastvorsprünge 13 angeordnet, die jeweils von einer der Rastnasen 12 hintergriffen werden.

Um einen absatzlosen Übergang zwischen Außenfläche A des Verkleidungsteils und der Außenfläche des Abdeckteils 8, 108, 118 oder 128 zu ermöglichen, kann in einen den Durchbruch 7, 107 umgebenden Randbereich 26 eine Nut 27 eingebracht sein, die den Durchbruch 7, 107 umlaufend umgibt (Fig. 2). In dieser Nut kommt ein am Abdeckteil 8, 108, 118 oder 128 abgebogen angeordneter, umlaufender Kragen 28 zu liegen, von dem vorzugsweise die Lappen ausgehen, wobei im Grund der Nut 27 Durchbrüche D liegen, die von den Lappen 10 durchsetzt werden. Hinter jedem Durchbruch D kann ein Rastvorsprung 13 liegen.

Fig. 4 zeigt im Teilschnitt noch das Tragelement 4 des Prallhorns 3. An seinem dem Stoßfängerträger 2 zugewandten Ende ist das Tragelement 4 gabelförmig erweitert und umgreift teilweise den Querschnitt Q des Stoßfängerträgers 2. Im Bereich der freien Enden der gabelförmigen Erweiterung 22 sind Durchbrüche 23 vorgesehen, die mit in dem Stoßfängerträger 2 angeordneten Durchbrüchen 24, die Befestigungsmittel bilden, fluchten. Ein Befestigungselement 25, insbesondere eine Schraube oder ein Niet, durchgreift die Durchbrüche 23 und 24 und hält so das Prallhorn 3 fest am Stoßfängerträger 2.

Anhand der Fig. 1 und 2 wird noch ein weiteres Ausführungsbeispiel eines Stoßfängersystems beschrieben: Das Abdeckteil 118, 128 kann ohne weiteres auch an dem Verkleidungsteil 6 befestigt werden, sofern für die im Bereich des Kennzeichenfeldes 18 liegenden Lappen 10 Aufnahmedurchbrüche 29 am Verkleidungsteil 6 vorgesehen sind. Die an jedem Lappen ausgebildete Rastnase 12 hintergreift somit den innen liegenden Randbereich des entsprechenden Aufnahmedurchbruchs 29. Hinter jedem Aufnahmedurchbruch 29 kann ein Rastvorsprung 13 liegen.

## Patentansprüche

1. Stoßfängersystem (1) für ein Fahrzeug, insbesondere Personenkraftwagen, umfassend einen Stoßfängerträger (2) und ein Verkleidungsteil (6), wobei der Stoßfängerträger (2) ein Befestigungsmittel für zumindest ein über eine Außenfläche des Verkleidungsteils (6) herausragendes Prallhorn (3) und das Verkleidungsteil (6) zumindest einen Durchbruch (7, 107) für das Prallhorn (3) aufweist, **gekennzeichnet durch** ein in den Durchbruch (7, 107) eingesetztes Abdeckteil (8, 108, 118, 128).

2. Stoßfängersystem nach Anspruch 1, **dadurch gekennzeichnet, dass** der Durchbruch (107) etwa mittig am Verkleidungsteil (106) ausgebildet ist und eine Öffnungsweite (W) für zwei beabstandet zueinander am Stoßfängerträger (2) befestigbare Prallhörner (3) aufweist.

3. Stoßfängersystem nach Anspruch 1, **dadurch gekennzeichnet, dass** das Verkleidungsteil (6) zwei beabstandet zueinander liegende Durchbrüche (7) für jeweils ein Prallhorn (3) aufweist.

4. Stoßfängersystem nach Anspruch 2, **dadurch gekennzeichnet, dass** an dem Abdeckteil (118, 128) ein Kennzeichenfeld (18) ausgebildet ist.

5. Stoßfängersystem nach Anspruch 3, **dadurch gekennzeichnet, dass** für jeden Durchbruch (7) ein Abdeckteil (108) vorgesehen ist.

6. Stoßfängersystem nach Anspruch 1, **dadurch gekennzeichnet, dass** bei einem Stoßfängersystem (1) ohne Prallhorn (3) das Abdeckteil (108, 118) etwa bündig mit dem Verkleidungsteil (6, 106) abschließt und an den Formverlauf der Außenkontur (A) des Verkleidungsteils (6, 106) angepasst ist.

7. Stoßfängersystem nach Anspruch 2, **dadurch gekennzeichnet, dass** das Stoßfängersystem (1) mit zwei beabstandet zueinander am Stoßfängerträger (2) befestigten Prallhörnern (3) ausgestattet ist und dass das Abdeckteil (128) zwei jeweils an ein Prallelement (5) des zugehörigen Prallhorns (3) angepasste Verkleidungskonturen (9) besitzt.

8. Stoßfängersystem nach Anspruch 1, **dadurch gekennzeichnet, dass** die Abdeckteile (8, 108, 118, 128) mittels einer Rast- oder Clipsverbindung (10) am Verkleidungsteil (6, 106) gehalten ist.

9. Stoßfängersystem nach Anspruch 1, **dadurch gekennzeichnet, dass** das jewilige Abdeckteil (8, 108, 118, 128) an dem zumindestens einem Prallelement (5) festgelegt und das zumindestens eine Prallelement (5) mittels einer Clipsverbindung (10) am Verkleidungsteil (6, 106) befestigt ist.

10. Stoßfängersystem nach Anspruch 1, **dadurch gekennzeichnet, dass** um den Durchbruch (7, 107) eine Nut (27) umläuft, in der ein am Abdeckteil (8, 108, 118, 128) abgebogen angeordneter Kragen (28) zu liegen kommt.

11. Stoßfängersystem nach Anspruch 3, **dadurch gekennzeichnet, dass** das Stoßfängersystem (1) mit zwei beabstandet zueinander am Stoßfängerträger (2) befestigten Prallhörnern (3) ausgestattet ist und dass jedes Abdeckteil (8) jeweils eine an ein Prallelement (5) des zugehörigen Prallhorns (3) angepasste Verkleidungskontur (9) besitzt.

## Claims

1. A bumper system (1) for a vehicle, in particular a passenger vehicle, comprising a bumper support (2) and a panel part (6), wherein the bumper support (2) has a fastening means for at least one impact horn (3) projecting beyond an outer face of the panel part (6) and the panel part (6) has at least one aperture (7, 107) for the impact horn (3), **characterized by** a covering part (8, 108, 118, 128) inserted in the aperture (7, 107).

2. A bumper system according to Claim 1, **characterized in that** the aperture (107) is formed substantially centrally in the panel part (106) and has an opening width (W) for two impact horns (3) which can be fastened to the bumper support (2) at a distance from each other.

3. A bumper system according to Claim 1, **characterized in that** the panel part (6) has two apertures (7) situated at a distance from each other for one respective impact horn (3) in each case.

4. A bumper system according to Claim 2, **characterized in that** a registration-plate space (18) is formed on the covering part (118, 128).

5. A bumper system according to Claim 3, **characterized in that** a covering part (108) is provided for each aperture (7).

6. A bumper system according to Claim 1, **characterized in that** in the case of a bumper system (1) without an impact horn (3) the covering part (108, 118) terminates substantially flush with the panel part (6, 106) and is adapted to the pattern of the outer profile (A) of the panel part (6, 106).

7. A bumper system according to Claim 2, **characterized in that** the bumper system (1) is provided with two impact horns (3) which are fastened to the bumper support (2) at a distance from each other, and the covering part (128) has two panel profiles (9) adapted in each case to an impact element (5) of the associated impact horn (3).

8. A bumper system according to Claim 1, **characterized in that** the covering parts (8, 108, 118, 128) [are] held on the panel part (6, 106) by means of a catch or clip connexion (10).

9. A bumper system according to Claim 1, **characterized in that** the respective covering part (8, 108, 118, 128) is fixed on the at least one impact element (5), and the at least one impact element (5) is fastened to the panel part (6, 106) by means of a clip connexion (10).

10. A bumper system according to Claim 1, **characterized in that** a groove (27), in which a collar (28) arranged bent on the covering part (8, 108, 118, 128) comes to rest, extends around the aperture (7, 107).

11. A bumper system according to Claim 3, **characterized in that** the bumper system (1) is provided with two impact horns (3) which are fastened to the bumper support (2) at a distance from each other, and each covering part (8) has one respective panel profile (9) adapted to an impact element (5) of the associated impact horn (3).

## Revendications

1. Système de pare-chocs (1) pour un véhicule, en particulier une voiture de tourisme, comportant un support de pare-chocs (2) et un élément d'habillage (6), le support de pare-chocs (2) comportant un moyen de fixation pour au moins une corne de choc (3) dépassant d'une surface extérieure de l'élément d'habillage (6), et l'élément d'habillage (6) au moins un ajour (7, 107) pour la corne de choc (3), **caractérisé par** un élément de recouvrement (8, 108, 118, 128) inséré dans l'ajour (7, 107).

2. Système de pare-chocs selon la revendication 1, **caractérisé en ce que** l'ajour (107) est réalisé approximativement au milieu de l'élément d'habillage (106) et présente une largeur d'ouverture (W) pour deux cornes de choc (3) pouvant être fixées à distance l'une de l'autre, sur le support (2).

3. Système de pare-chocs selon la revendication 1, **caractérisé en ce que** l'élément d'habillage (6) présente deux ajours (7) situés à distance l'un de l'autre, pour chacun une corne de choc (3).

4. Système de pare-chocs selon la revendication 2, **caractérisé en ce qu'**une zone d'identification (18) est réalisée sur l'élément de recouvrement (118, 128).

5. Système de pare-chocs selon la revendication 3, **caractérisé en ce que** pour chaque ajour (7) est prévu un élément de recouvrement (108).

6. Système de pare-chocs selon la revendication 1, **caractérisé en ce que** dans le cas d'un système de pare-chocs (1) sans corne de choc (3), l'élément de recouvrement (108, 118) se termine approximativement à fleur de l'élément d'habillage (6, 106) et est adapté à la forme du contour extérieur (A) de l'élément d'habillage (6, 10-).

7. Système de pare-chocs selon la revendication 2, **caractérisé en ce que** le système de pare-chocs (1) est équipé de deux cornes de choc (3) fixées à distance l'une de l'autre sur le support de pare-chocs (2), et **en ce que** l'élément de recouvrement (128) présente deux contours d'habillage (9) adaptés chacun à un élément de choc (5) de la corne de choc (3) correspondante.

8. Système de pare-chocs selon la revendication 1, **caractérisé en ce que** les éléments de recouvrement (8, 108, 118, 128) sont maintenus sur l'élément d'habillage (6, 106) au moyen d'une liaison à encliquetage ou clipsée (10).

9. Système de pare-chocs selon la revendication 1, **caractérisé en ce que** chaque élément de recouvrement (8, 108, 118, 128) est fixé à l'élément ou aux éléments de percussion (5) et **en ce que** le ou les éléments de percussion (5) sont fixés à l'élément d'habillage (6, 106) au moyen d'une liaison clipsée (10).

10. Système de pare-chocs selon la revendication 1, **caractérisé en ce qu'**autour de l'ajour (7, 107) s'étend une rainure (27) dans laquelle vient se placer une collerette (28) disposée courbée sur l'élément de recouvrement (8, 108, 118, 128).

11. Système de pare-chocs selon la revendication 3, **caractérisé en ce que** le système de pare-chocs (1) est équipé de deux cornes de choc (3) fixées à distance l'une de l'autre sur le support de pare-chocs (2), et **en ce que** chaque élément de recouvrement (8) présente un contour d'habillage (9) adapté à un élément de percussion (5) de la corne de choc (3) correspondante.
